# EUROPÄISCHE PATENTANMELDUNG

(11) **EP 1 679 147 A2**
(43) Veröffentlichungstag der Anmeldung: **12.07.2006**
(21) Anmeldenummer: 05027824.1
(22) Anmeldetag: 20.12.2005
(51) Int. Cl.: B23K 11/11, B23K 11/34

(54) **Verfahren, Einrichtung und Hilfsmittel zum elektrischen Pressschweissen**

(30) Priorität: 16.03.2005 DE 102005012512; 23.12.2004 DE 202004020166 U
(71) Anmelder: RS elektronik GmbH, 86316 Friedberg (DE)
(72) Erfinder: Dr. Wolf, Arne, 86438 Kissing (DE); Dr. Klett, Andreas, 86438 Kissing (DE); Feller Berhnhard, 86316 Friedberg (DE)
(74) Vertreter: Ernicke, Klaus Stefan

(57) **Zusammenfassung**

Die Erfindung betrifft ein Verfahren und eine Einrichtung zum elektrischen Pressschweißen von Werkstücken (4,5,103,104), wobei vor dem Pressschweißen zwischen die Werkstücke (4,5,103,104) an der Schweißstelle (18,107) ein elastisches oder plastisches und elektrisch isolierendes Material (34) eingebracht wird, welches beim Zusammenpressen derart verformt oder verdrängt wird, dass eine stromleitende Verbindung zwischen den Werkstücken (4,5,103,104) hergestellt wird. Die Pressschweißvorrichtung (2,101) weist eine Applikationsvorrichtung (27) für die Zuführung eines elektrisch isolierenden Materials (34) und ggf. eine elektrisch leitfähigen und schweißkontaktbildenden Schweißmittels (7) auf.

## Beschreibung

Die Erfindung betrifft ein Verfahren, eine Einrichtung und ein Hilfsmittel zum elektrischen Pressschweißen von Werkstücken mit den Merkmalen im Oberbegriff der selbstständigen Verfahrens- und Sachansprüche.

Aus der Praxis sind elektrische Impuls-Schweißverfahren mit Presskrafteinwirkung auf die zu verschweißenden Bauteile bekannt, z.B. als konventionelle Kondensatorentladungs-Schweißverfahren nebst zugehörigen Schweißvorrichtungen. Bei solchen Impuls-Schweißverfahren werden die elektrisch leitenden Werkstücke in Berührungskontakt gebracht und zwischen die geöffneten Elektroden eingelegt. Anschließend werden sie von den zugestellten Elektroden zusammen gepresst und von einem Impulsstrom durchflossen, wobei sie am Kontaktbereich erwärmt werden, in einen teigigen Zustand übergehen und sich miteinander verbinden. Um eine ausreichend hohe Stromkonzentration zu erreichen, werden die Kontaktstellen der Werkstücke möglichst klein gehalten, wobei z.B. ein Punkt- oder Linienkontakt besteht. Bei Blechen werden zu diesem Zweck an ein oder beiden Blechen in einer Bauteilvorbereitung Buckel angebracht oder angeformt bzw. eingeformt. Dies erfordert einen zusätzlichen Aufwand und verlangt außerdem ein frühzeitiges Festlegen des Fügevorgangs auf einen bestimmten Schweißprozess. Nachträgliche Änderungen und Anpassungen der Werkstücke oder des Prozesses sind nur noch schwer und mit hohem Aufwand möglich.

Es ist Aufgabe der vorliegenden Erfindung, eine bessere Technik zum elektrischen Pressschweißen aufzuzeigen.

Die Erfindung löst diese Aufgabe mit den Merkmalen in den Verfahrens- und Sachansprüchen.

Das zwischen die Werkstücke an der Schweißstelle einbringbare elektrisch isolierende Material hat verschiedene Vorteile und kann für unterschiedliche Zwecke benutzt werden. Es kann einerseits als Halter, insbesondere als Träger für ein Schweißmittel dienen, mit dem dann die Schweißverbindung zwischen den Werkstücken geschaffen wird. Das Schweißmittel kann die bislang üblichen angeformten Buckel an zumindest einem der Werkstücke ersetzen. Alternativ kann das elektrisch isolierende Material ein bogen- oder ringförmiger Isolator sein, der die Schweißstelle umgibt und die Werkstücke vor und ggf. während des Pressschweißprozesses temporär distanziert, so dass während des Prozesses über zumindest eine der Elektroden ein Buckel oder eine andere prozessgünstige Verformung in mindestens eines der Werkstücke eingebracht werden kann. Die elastischen oder plastischen Eigenschaften des elektrisch isolierenden Materials unterstützen in den verschiedenen Varianten die gewünschten temporären Wirkungen. Das elektrisch isolierende Material kann dadurch anfangs eine elektrisch isolierende und distanzierende Wirkung auf die Werkstücke haben, die im weiteren Prozessverlauf durch eine Verformung oder Verdrängung des Materials aufgehoben wird, so dass die Schweißverbindung entstehen kann.

Das elektrisch isolierende Material kann thermisch resistent und nach dem Schweißprozess noch im Bereich der Schweißstelle vorhanden sein, wo es eine schützende oder unterstützende Wirkung am fertigen Schweißteil entfalten kann. Das verdrängte oder verformte Material kann z.B. die Schweißstelle schützend umgeben und gegen Umwelteinflüsse abschirmen. Andererseits kann es auch eine Klebwirkung oder Haftwirkung aufweisen, die ggf. auch erst durch die Wärmezufuhr beim Schweißprozess aktiviert wird und die die Schweißverbindung kraft- und belastungsmäßig unterstützt.

Durch das Schweißmittel kann auf die bisher übliche Anformung von Buckeln verzichtet und die Werkstückvorbereitung vereinfacht werden. Das lose und separat auf ein oder mehrere Werkstücke aufbringbare Schweißmittel übernimmt die Buckelfunktion der Abstandsbildung und der Stromkonzentration. Das Schweißmittel bildet durch die beidseitige Verbindung mit den Werkstücken auch den Schweißkontakt bzw. die Schweißverbindung am fertigen Schweißteil.

Das Schweißmittel ist ein Zusatzmaterial, welches beliebig verändert und an die Erfordernisse des Fügeprozesses angepasst und ggf. auch verändert werden kann. Hierdurch lässt sich der Fügeprozess optimieren. Andererseits kann die Entscheidung für ein bestimmtes Schweißverfahren dank dieses Zusatzmaterials sehr spät in der Entwicklung der Bauform und der Fertigung der Werkstücke getroffen werden.

Die Schweißmittelzugabe kann an beliebiger Stelle im Fertigungsprozess vor dem Pressschweißen erfolgen. Besonders günstig ist eine räumlich und zeitlich nahe Kombination des Schweißmittelauftrags und des Pressschweißens in einer Pressschweißstation unter einer Pressschweißzelle.

Das Schweißmittel kann zusammen mit dem elektrisch isolierenden Halter oder lose auf zumindest eines der Werkstücke aufgelegt werden. Der Halter kann unterschiedlich ausgebildet sein und unterschiedliche Funktionen erfüllen. Der Halter kann einerseits nur ein Träger zur temporären Befestigung des Schweißmittels vor und während des Schweißprozesses sein. Der Halter kann darüber hinaus eine Zusatzfunktion als Dichtmittel, Isoliermittel, Klebemittel oder dgl. ausüben. Der Halter sorgt auch für eine verbesserte Schwingungs- und Schalldämpfung des Schweißteils.

Mit dem Halter ist es insbesondere möglich, die Schweißstelle dichtend zu umgeben und gegen Korrosion oder andere schädliche Umwelteinflüsse abzuschirmen. Durch das Schweißmittel allein, aber auch durch die Kombination von Schweißmittel und Halter, kann zudem eine dichte Schweißverbindung geschaffen werden. Der Halter kann ferner die Verbindungsgüte verbessern, insbesondere wenn er als Klebstoff ausgebildet ist. Durch seine Spreizkraft bzw. seine Klebekraft wird eine zusätzliche Haltekraft zwischen den Werkstücken an der Schweißstelle eingebracht, welche die Scherfestigkeit der Werkstückverbindung erhöht. Die Reduzierung von Biegemomenten führt zu einer höheren Standfestigkeit bei Wechselbelastungen.

Für die Auftragetechnik und die Verbindung von Schweißmittel und Halter gibt es unterschiedliche Möglichkeiten. Besonders günstig ist eine Vermischung einer plastischen Masse, die als Halter fungiert, mit einem Schweißmittel in Partikelform. Diese plastische Verbundmasse lässt sich beliebig formen und auftragen, was besonders große Freiheiten in der Gestaltung der Schweißkontur und der Verbindungsstellen bietet.

Das Schweißmittel hat insbesondere den Vorteil einer größeren Freiheit und Präzision in der Buckelgestaltung. Beim Stand der Technik mit angeformten und insbesondere tiefgezogenen Buckeln bestanden große ungünstige Fertigungstoleranzen hinsichtlich Größe und Form der vorgefertigten Buckel, was nachteilige Folgen auf die Schweißqualität hatte. Durch das beanspruchte Schweißmittel sind eine wesentlich höhere Präzision und damit bessere Schweißgüten erreichbar.

Das Schweißmittel verschafft außerdem Freiheiten in der Materialwahl. Es kann aus einem anderen Material als die Werkstücke bestehen und damit spezielle Vorteile bieten. Z.B. lassen sich über solche Schweißmittel Werkstücke aus normalerweise unverträglichen und nicht miteinander verbindbaren Werkstoffen pressschweißen. Auch auf sonstige Werkstoff- oder Fügeerfordernisse kann durch Materialwahl des Schweißmittels Rücksicht genommen werden. Insbesondere die Elastizität oder Festigkeit der Schweißverbindung bzw. Schweißnaht können auf den gewünschten Wert eingestellt werden.

Durch die Zugabefähigkeit des Schweißmittels ist es möglich, das Volumen, die Größe und insbesondere die Verteilung des Schweißmittels zu wählen und bei Bedarf, ggf. zu Optimierungszwecken oder dgl., zu verändern. Durch eine Veränderung von Form und Volumen des Schweißmittels kann auf die Stromkonzentration und die Schweißgüte Einfluss genommen werden.

Das beanspruchte Verfahren zum elektrischen Pressschweißen kann unterschiedlichen Zwecken dienen. Einerseits kann die Pressschweißverbindung die Hauptverbindung der Werkstücke darstellen. Andererseits kann über das Pressschweißen ein Heften oder Vorfixieren der Werkstücke für einen nachfolgenden Hauptverbindungsprozess, z.B. ein Löten, Kleben mit Aushärtung etc., geschaffen werden. Über das Schweißmittel und seinen Auftrag kann auch der Spalt zwischen den Werkstücken vor und nach dem Pressschweißen genau eingestellt werden. Diese definierte Abstandsbildung kann ebenfalls für Nachfolgeprozesse, insbesondere das vorerwähnte Löten, ausgenutzt werden. In diesem Zusammenhang sind auch die Gestaltungsmöglichkeiten mit dem Halter und die hierbei erzielbaren Zusatzfunktionen der Abdichtung, Isolierung, Dämpfung etc. von besonderem Vorteil. Über den Halter können außerdem Fertigungs- und Toleranzprobleme der Werkstücke beseitigt werden, indem der elektrisch isolierende Halter als Distanzstück im Spalt zur Vermeidung von Nebenschlüssen und zur räumlichen Trennung von außerhalb des Schweißbereichs liegenden Werkstückpartien benutzt wird.

Das beanspruchte Pressschweißverfahren und das Schweißmittel sowie der Halter als Hilfsmittel können für unterschiedlichste Werkstück und Werkstückverbindungen eingesetzt werden. Besondere Vorteile ergeben sich beim Dichtschweißen von Werkstücken, z.B. von Bördelnähten an Behältern oder dgl.. Die kombinierte Schweiß- und Dichtfunktion hat außerdem Vorteile bei der Verbindung von Werkstücken mit einer Durchgangsöffnung, insbesondere wenn diese den Zutritt von aggressiven Medien ermöglicht. Ein besonders vorteilhafter Einsatzbereich ist hierbei das Anschweißen von Verbindungselementen, z.B. Muttern, Anschlussstutzen oder dgl. an andere Werkstücke, insbesondere Bleche. Günstig ist ferner die Möglichkeit, elektrische Pressschweißprozesse, insbesondere Impulspressschweißverfahren, auch bei Bauteilverbindungen mit Vorteil einzusetzen, wo sie bislang noch nicht Verwendung fanden. Durch das separate Schweißmittel erhalten elektrische Pressschweißverfahren einen wesentlich größeren und weiteren Einsatzbereich als bisher.

Die eingangs genannte Variante des elektrisch isolierenden Materials in Form eines bogen- oder ringförmigen Isolators an der Schweißstelle hat den Vorteil, dass beim Schweißen, insbesondere Impulsschweißen, erst ein Buckel gebildet wird. Aufwändige Bauteilvorbereitungen und insbesondere das vorherige Anbringen oder Anformen von Buckeln an Blechen, können entfallen. Die Fokusierung des Impulsstroms wird über den im wesentlichen bogen- oder ringförmigen Isolator in einem Spalt zwischen den Werkstücken bewirkt. Dieser Isolator isoliert die Werkstücke elektrisch und vermeidet eine Kurzschlußsituation. Hierbei kann er auch eine Werkstückdistanzierung bewirken. Der notwendige stromleitende Werkstückkontakt kann während des Schweißprozesses durch eine Verformung zumindest eines der Werkstücke in einen Freiraum innerhalb des Isolators bewirkt werden. Der Isolator selbst kann am Schweißteil verbleiben und umgibt die geschaffene Schweißverbindung oder Naht, wobei er eine Schutzfunktion ausüben kann.

Während des Schweißprozesses und der Einbringung der Verformung wird der Isolator komprimiert und entwickelt nach der Entlastung eine Spannkraft und Spreizwirkung an der Schweißstelle. Der Isolator kann auch als Klebstoff ausgeführt sein, der vorzugsweise erst während des Schweißprozesses durch den Impulsstrom bzw. die Wärme aktiviert wird. Durch die Spreizkraft bzw. die Klebekraft wird eine zusätzliche Haltekraft zwischen den Werkstücken an der Schweißstelle eingebracht, welche die Scherfestigkeit der Werkstückverbindung erhöht. Außerdem kann der Isolator Verbesserungen bei der Dämpfung des Schweißteils bzw. der Werkstücke und beim Korrosionsschutz oder der Abdichtung an der Verbindungsstelle bewirken.

Der Bauaufwand zur konstruktiven Umsetzung der Schweißtechnik ist gering. Die beaufschlagte Elektrode braucht lediglich mit einem geeigneten Stempel ausgerüstet zu werden. Hierbei empfiehlt es sich, den Stempel aus einem Material herzustellen, welches eine ausreichende Festigkeit mit sich bringt und mit dem beaufschlagten Werkstück keine bleibende Verbindung eingeht. Vorzugsweise ist der Stempel im Innenbereich der Elektrode angeordnet und wird allseitig von der Elektrode umgeben. Dies sichert den Elektrodenkontakt mit dem beaufschlagten Werkstück und die Stromleitung während des Schweißprozesses und der Einbringung der Verformung.

In den Unteransprüchen sind weitere vorteilhafte Ausgestaltungen des Verfahrens, der Einrichtung und des Hilfsmittels zum Pressschweißen angegeben.

Die Erfindung ist in den Zeichnungen beispielsweise und schematisch dargestellt. Im einzelnen zeigen:
- Figur 1:: eine Pressschweißvorrichtung mit einem Schweißmittel und einem Halter in Seitenansicht,
- Figur 2:: eine Draufsicht auf eine Pressschweißstation mit einer Pressschweißvorrichtung und einer Applikationsvorrichtung,
- Figur 3 bis 7:: verschiedene Ausführungsformen des Schweißmittels und des Halters im Querschnitt,
- Figur 8 bis 11:: verschiedene Varianten in der Auftragform des Schweißmittel und des Halters in der Draufsicht,
- Figur 12 und 13:: eine Pressschweißverbindung vor und nach dem Zusammenpressen und Schweißen,
- Figur 14 und 15:: Varianten zur Ausführung von Figur 12 und 13 im Halbschnitt,
- Figur 16:: eine schematische Darstellung einer Auftragvorrichtung mit einer Zuführeinrichtung zum Mischen einer plastischen Masse mit einem Schweißmittel,
- Figur 17:: einen abgebrochenen Querschnitt durch eine Schweißstelle an einem Schweißteil,
- Figur 18 bis 20:: verschiedene Varianten einer Schweißverbindung,
- Figur 21:: eine schematische Seitendarstellung einer Variante der Schweißvorrichtung,
- Figur 22:: eine Schemadraufsicht auf ein Schweißteil,
- Figur 23 - 25:: Bewegungsabläufe der Elektrode und der Werkstücke in drei Schritten beim Schweißprozess,
- Figur 26:: eine vergrößerte und abgebrochene Schnittdarstellung der Schweißstelle am Schweißteil und
- Figur 27 - 29:: verschiedene Querschnittsdarstellungen eines Stempels und eines Isolators.

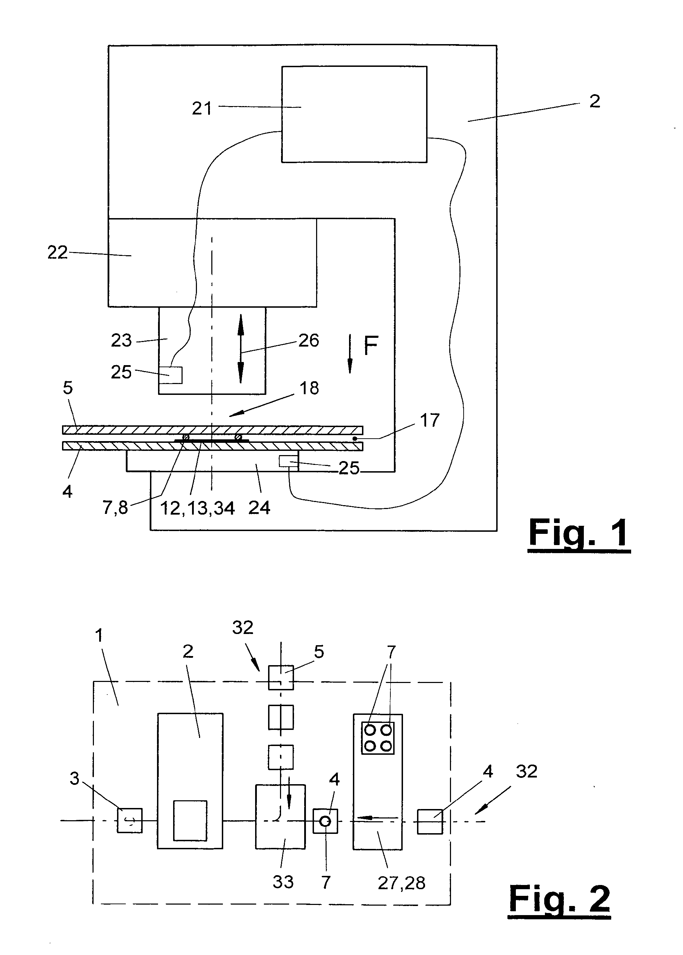

Die Erfindung betrifft ein Verfahren, eine Einrichtung und ein Hilfsmittel zum elektrischen Pressschweißen von Werkstücken (4,5,103,104). Das Pressschweißen wird mittels einer in Figur 1 vereinfacht dargestellten Pressschweißvorrichtung (2) durchgeführt, welche z.B. in einer Pressschweißstation oder einer Pressschweißzelle (1) gemäß Figur 2 angeordnet sein kann.

Beim Pressschweißen werden die zunächst auf Distanz bzw. auf Spalt (17) gehaltenen Werkstücke (4,5,103,104) mit der Pressschweißvorrichtung (2) und einer in Zustellrichtung (26) wirkenden Presskraft F zusammengepresst und dabei mit einem Schweißstrom beaufschlagt. Vorzugsweise handelt es sich hierbei um einen Impulsstrom, der z.B. durch eine Kondensatorentladung erzeugt wird.

Vor dem Pressschweißen kann zwischen die Werkstücke (4,5,103,104) an der Schweißstelle (18,107) ein elastisches oder plastisches und elektrisch isolierendes Material (34) eingebracht werden, welches die Werkstücke (4,5,103,104) zunächst distanziert und in verschiedenen Ausführungsformen auch elektrisch isoliert und welches beim Zusammenpressen derart verformt oder verdrängt werden kann, dass eine stromleitende Verbindung zwischen den Werkstücken (4,5,103,104) hergestellt wird. Hierbei wird auch eine evtl. anfänglich bestehende elektrische Isolationswirkung des elektrisch isolierenden Materials (34) aufgehoben. Das elektrisch isolierende Material (34) kann gemäß der nachfolgend beschriebenen Ausführungsbeispiele unterschiedlich ausgebildet sein und unterschiedliche Funktionen und Auswirkungen haben. Es kann z.B. ein Halter (12) oder ein Isolator (105) sein.

Der Strom wird in der Ausführungsform von Figur 1 bis 20 durch ein nachfolgend näher erläutertes Schweißmittel (7) zwischen den Werkstücken (4,5,103,104) übertragen und dabei konzentriert. Das elektrisch isolierende Material (34) bildet hierbei einen Halter (12) für das elektrisch leitfähige Schweißmittel (7). Der Halter (12) kann unterschiedliche Ausführungsformen haben. Der Halter (12) und das Schweißmittel (7) können den Abstand bzw. den Spalt (17) zwischen den Werkstücken (4,5,103,104) bilden. Das Schweißmittel (7) bildet den Schweißkontakt und die Schweißverbindung (20) zwischen den Werkstücken (4,5,103,104) am fertigen Schweißteil (3).

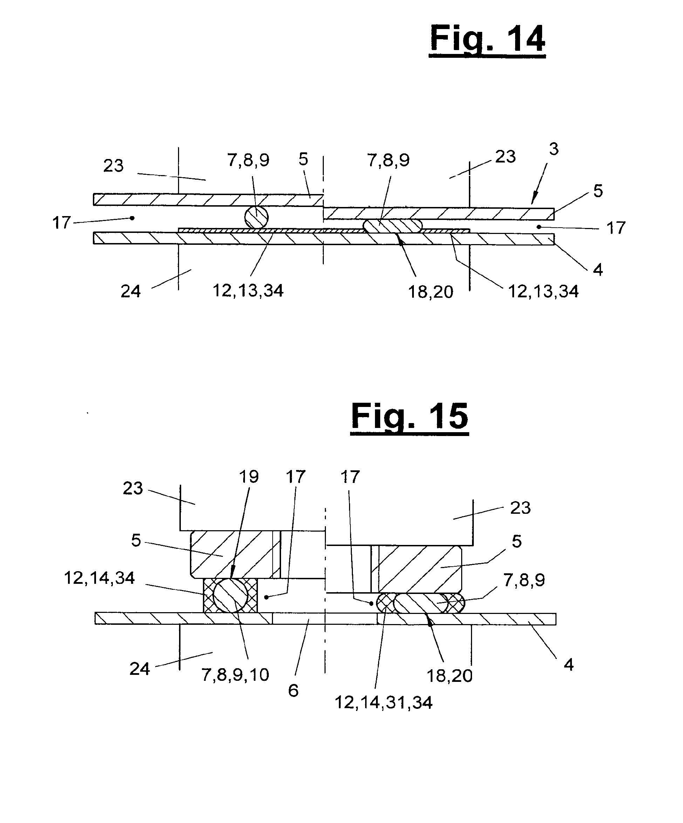

Das Schweißteil (3) wird von zwei oder mehr Werkstücken (4,5,103,104) gebildet. Die Werkstücke (4,5,103,104) können von beliebiger Art und Größe sein. Sie sind z.B. als dünne Bleche oder wie in Figur 15 als Muttern oder andere Körper ausgebildet. Sie bestehen aus schweißfähigen und elektrisch leitenden Werkstoffen, z.B. Stahl oder anderen Metallen. Die Werkstücke (4,5,103,104) können eine beliebige Geometrie aufweisen. An der Schweißstelle (18) können sie eine massive Wandung oder alternativ ein oder mehrere Öffnungen (6) oder Durchbrechungen wie in der nachfolgend beschriebenen Figur 15 haben.

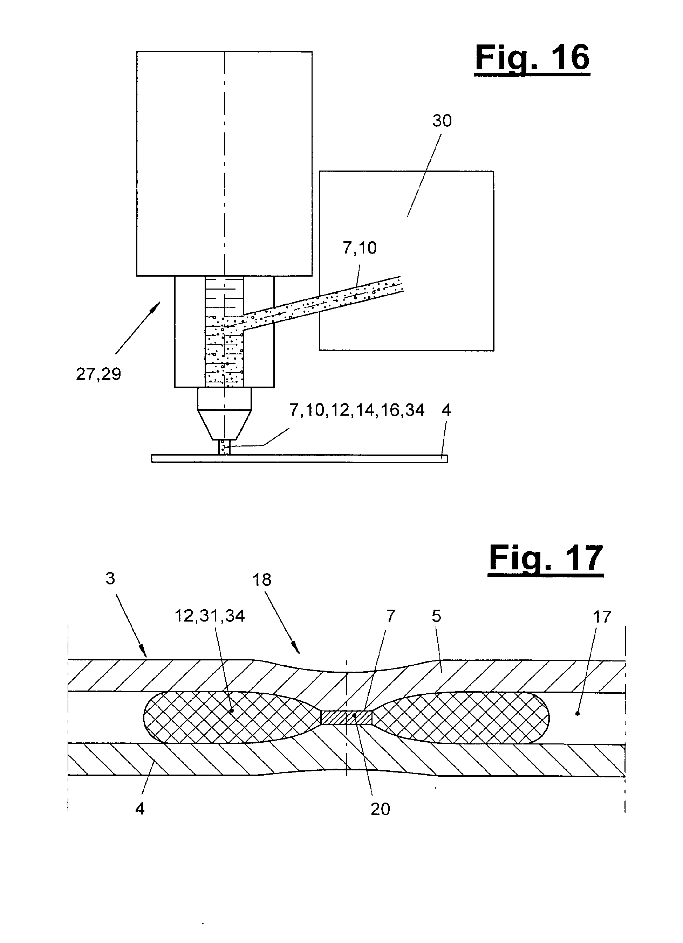

Die in Figur 1 schematisch dargestellte Pressschweißvorrichtung (2) besteht aus einem Maschinengestell, das z.B. die dargestellte C-Form haben kann. Innerhalb oder außerhalb der Vorrichtung ist eine Schweißstromquelle (21) angeordnet, die von beliebiger Bauart sein kann und z.B. als Kondensatorentladungs-Stromquelle ausgeführt ist. Die Stromquelle (21) ist mittels Stromanschlüssen (25) mit zwei Elektroden (23,24) verbunden, welche zusammen mit den Werkstücken (4,5) mittels einer Elektrodenanpressvorrichtung (22) in Zustellrichtung (26) relativ zueinander bewegt und an der Schweißstelle (18) mittels einer geeigneten Presskraft F zusammengepresst werden können. Die Schweißstromquelle (21) erzeugt zum Schweißen einen Schweißstrom, vorzugsweise einen Impulsstrom, mit hoher Stromstärke, der über die Elektroden (23,24) durch die mit stromleitendem Kontakt anliegenden Werkstücke (4,5) und das Schweißmittel (7) geleitet wird. Das Schweißmittel (7) sorgt an der Schweißstelle (18) für einen lokal begrenzten Stromübergang zwischen den Werkstücken (4,5) in Verbindung mit einer flächenmäßig begrenzten Erwärmung und einer zumindest teilweisen Plastifizierung der Werkstücke (4,5) und des Schweißmittels (7) an der Kontaktstelle, wobei hier eine Schweißverbindung (20) entsteht. Figur 17 zeigt eine solche Schweißverbindung (20).

Vor dem Pressschweißen wird auf mindestens eines der Werkstücke (4,5), vorzugsweise auf das untere Werkstück (4), das Schweißmittel (7) aufgebracht. Dies kann an beliebiger Stelle und mit beliebigem zeitlichem Vorlauf geschehen. Vorzugsweise findet dieser Auftrag zeitnah vor dem Pressschweißvorgang und innerhalb einer gemeinsamen Pressschweißzelle (1) statt. Das Schweißmittel (7) ist ein Zusatzmaterial in Festkörperform für den Pressschweißprozess, welches lose auf eines der Werkstücke (4,5) direkt aufgelegt werden kann. In den gezeigten und beschriebenen Ausführungsformen ist zusätzlich ein Halter (12) für das Schweißmittel (7) vorhanden, der unterschiedlich ausgebildet sein kann. Dieser Halter (12) kann in der besagten einfachsten Ausführungsform ersatzlos entfallen.

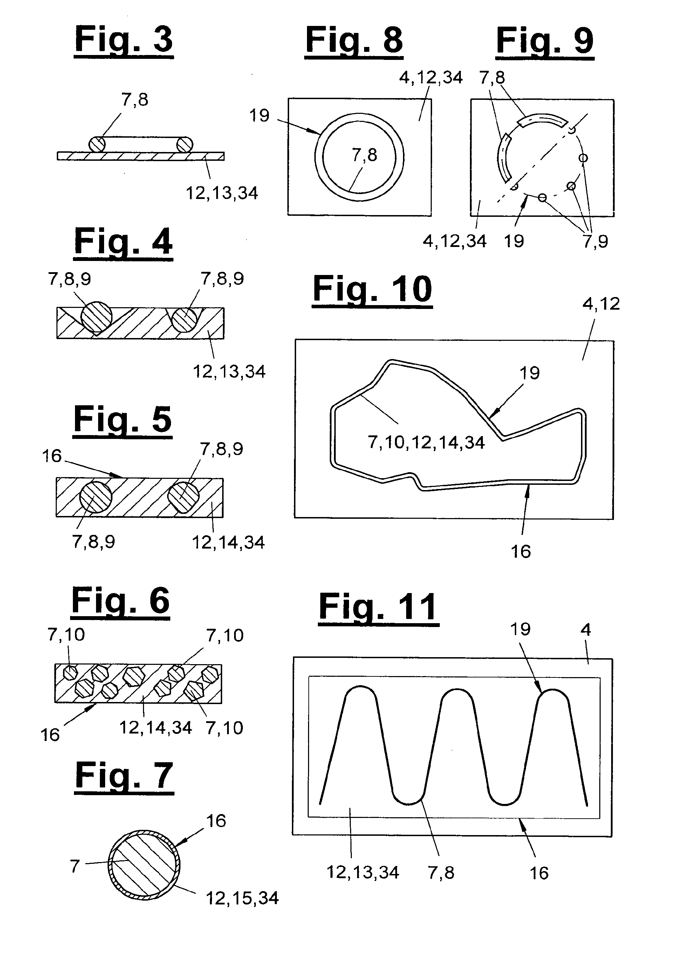

Figur 3 bis 11 zeigen verschiedene Varianten des Schweißmittels (7) und des Halters (12). Das Schweißmittel (7) kann punktförmig oder linienförmig aufgebracht werden, wobei es zumindest bereichsweise entlang einer Schweißkontur (19) aufgetragen werden kann. Das Schweißmittel (7) kann hierbei eine längliche Form in Gestalt eines Streckenteils (8) oder eine räumlich kleinere Punktform in Gestalt eines Punktteils (9) haben. Außerdem kann das Schweißmittel (7) in Form von kleinen Partikeln (10) vorliegen.

Figur 8 zeigt eine Variante des Schweißmittels (7) als einzelnes, ringförmig geschlossenes Streckenteil (8). Die Schweißkontur (19) der Schweißverbindung (20) wird in dieser Variante voll umfänglich vom Schweißmittel (7) gebildet.

In der Variante von Figur 9 sind zwei verschiedene Abwandlungen im Halbschnitt dargestellt. In beiden Fällen ergibt sich wiederum eine kreisringförmige Schweißkontur (19). Diese wird in der linken oberen Bildhälfte von zwei bogenförmigen Streckenteilen (8) gebildet, die in Ringform gekrümmt und ggf. umfangseitig mit Abstand zueinander angeordnet sind. In der rechten unten Bildhälfte wird die Schweißkontur (19) von mehreren mit umfangseitigern Abstand in Kreisbogen angeordneten Punktteilen (9) gebildet.

In der Variante von Figur 10 hat die Schweißkontur (19) einen anderen ringförmig geschlossenen und unregelmäßigen Verlauf. Auch hier kann das Schweißmittel (7) in der gezeigten Form einteilig ausgebildet oder wie in Figur 9 mehrteilig gestaltet sein. Figur 10 zeigt außerdem eine besondere Variante einer Verbindung von Schweißmittel (7) und Halter (12) zu einem Verbundteil (16), worauf nachfolgend noch im einzelnen eingegangen wird.

In Figur 11 hat die Schweißkontur (19) einen offenen Verlauf und besitzt z.B. eine Mäanderform. Auch hier kann das Schweißmittel (7) ein oder mehrteilig sein. Beispielsweise handelt es sich um ein einteiliges und entsprechend mäanderförmig gebogenes Streckenteil (8) auf einem Halter (12), wobei wiederum ein Verbundteil (16) gebildet werden kann.

In Figur 3 ist im Querschnitt ein ringförmiges Schweißmittel (7) oder Streckenteil (8) dargestellt. Es liegt auf einem Halter (12) auf, der als Träger fungiert und der z.B. die Form einer dünnen biegeelastischen Folie (13) oder Bahn haben kann. Alternativ kann der Träger (12) auch als etwas dickere Platte oder dgl. ausgebildet sein.

Figur 4 zeigt eine Variante eines dickeren Halters (12) mit mehreren Ausnehmungen, in die das Schweißmittel (7) in offener Lage eingebettet ist. Das Schweißmittel (7) kann hierbei wahlweise nach oben über die Oberfläche des Halters (12) vorstehen, unter sie zurückspringen oder mit ihr bündig abschließen. In beiden Varianten von Figur 3 und 4 kann das Schweißmittel (7) als loses Teil nachträglich auf den Halter (12) aufgelegt werden. Es kann hierbei wiederum eine beliebige Formgestaltung als Streckenteil (8) oder Punktteil (9) haben.

In der Variante von Figur 5 ist ein Verbundteil (16) dargestellt, bei dem das Schweißmittel (7) in den Halter (12) eingebettet ist. Der Halter (12) kann hierbei eine plastische Masse (14) sein, die alternativ nach der Einbettung des Schweißmittels (7) ihre Plastizität behalten kann oder sich unter Aushärtung oder dgl. verfestigen kann. Das Schweißmittel (7) ist hierbei an allen Seiten vom Halter (12) umgeben, wobei an den zu den Elektroden gelegenen Seiten die Halterschicht relativ dünn ist.

Figur 5 verdeutlicht Abwandlungsmöglichkeiten für die Querschnittsform des Schweißmittels (7). In der linken Bildhälfte ist z.B. eine kreisrunde Querschnittsform dargestellt. Ein Punktteil (9) kann hierbei eine Kugelform haben. Ein Streckenteil (8) besitzt eine zylindrische und ggf. in der Längsachse gebogene Stangenform. In der rechten Bildhälfte ist eine zumindest nach einer Elektrodenseite sich verjüngende und verdrängungsgünstige Querschnittsform, z.B. eine Keil- oder Konusform, dargestellt. Diese Querschnittsformen können auch bei den anderen Ausführungsbeispielen Verwendung finden.

Figur 6 zeigt eine weitere Variante eines Verbundteils (16), bei dem das Schweißmittel (7) in Form von vielen kleinen Partikeln (10) im Halter (12) eingebettet ist. Der Halter (12) kann hierbei wiederum aus einer plastischen Masse (14) bestehen. Die Partikel (10) können in mehreren Lagen übereinander angeordnet sein. Die Partikelkonzentration im Halter (12) kann örtlich unterschiedlich sein und in der Breite, wie auch in der Länge des Halters (12), insbesondere auch entlang der Schweißkontur (19), variieren.

Figur 7 zeigt eine Ausführung mit einem Schweißmittel (7) welches zumindest bereichsweise an der Außenseite mit einem Halter (12) in Form einer Hülle (15) oder einer Beschichtung versehen ist. In der gezeigten Ausführungsform ist das Schweißmittel (7) vollständig umhüllt. Alternativ kann die Hülle oder Beschichtung (15) nur bereichsweise, z.B. an der Unterseite, vorhanden sein und zur Verbindung mit dem Werkstück (4) dienen.

In allen gezeigten Ausführungsformen besteht das Schweißmittel (7) aus einem Festkörperwerkstoff und hat eine innere Formstabilität, die derjenigen der Buckel beim Stand der Technik entspricht. Das Schweißmittel (7) ist unter der Presskraft (5) verformbar, setzt der Verformung aber einen Widerstand entgegen. Das Schweißmittel (7) besteht z.B. aus Metall oder einem anderen elektrisch leitenden Werkstoff.

Der Schweißmittelwerkstoff kann der gleiche Werkstoff wie derjenige der Werkstücke (4,5) sein. Alternativ sind unterschiedliche Werkstoffpaarungen möglich. Hierbei können auch die Werkstoffe der Werkstücke (4,5) differieren. Z.B. können ein Werkstück (4,5) und das Schweißmittel (7) aus dem gleichen Werkstoff bestehen, wohingegen das andere Werkstück (5,4) aus einem anderen Material gefertigt ist. Die Werkstücke (4,5) und das Schweißmittel (7) können auch aus drei unterschiedlichen Werkstoffen bestehen. Insbesondere können die Werkstücke (4,5) aus Materialien hergestellt sein, die sich untereinander nicht unmittelbar verschweißen und verbinden lassen. In diesem Fall kann das Schweißmittel (7) aus einem Transfermaterial bestehen, welches mit beiden Werkstück-Werkstoffen schweißbar ist.

Der Halter (12) besteht aus einem verformbaren Material, welches vorzugsweise elektrisch isolierend ist. Die Verformbarkeit oder Plastizität ist höher als diejenige des Schweißmittels (7), so dass sich beim Zusammenpressen der Werkstücke (4,5) das formsteifere Schweißmittel (7) durch das Haltermaterial drückt und dieses verdrängt. Eine an den Kontaktbereichen gerundete oder konische Form ist hierfür günstig. Auch bei eingebetteten Varianten kommt das Schweißmittel (7) dadurch in Berührungs- und Stromkontakt mit den Werkstücken (4,5). Bei der Variante von Figur 6 mit den Schweißmittel-Partikeln (10) kommen letztere beim Verpressen außerdem in gegenseitigen Strom führenden Kontakt.

Der Halter (12) besteht außerdem vorzugsweise aus einem umweltresistenten Isoliermaterial, welches das Schweißmittel (7) und später auch die Schweißverbindung (20) gegen Umwelteinflüsse und aggressive Medien abschirmen kann. Die Dicke des Halters (12) ist dabei so gewählt, dass er nach dem Pressschweißen den verbleibenden Spalt (17) ausfüllt. Die gegenseitige Zuordnung von Schweißmittel (7) und Halter (12) wird so gewählt, dass der Halter (12) die Schweißverbindung (20) an ein oder mehreren Seiten dichtend und isolierend umgibt.

Der Halter (12) kann ferner als Klebstoff ausgebildet sein oder einen Klebstoff aufweisen. Die Folien (13) können beispielsweise auf ein oder beiden Seiten eine Klebefläche zur Fixierung auf dem Werkstück (4) einerseits und zum Halten des Schweißmittels (7) andererseits haben. Ähnliche Gestaltungen sind auch bei den anderen Varianten von Figur 4 bis 7 möglich. Der Klebstoff kann permanent aktiviert sein. Er kann bei Raumtemperatur und entlastetem Zustand alternativ inert sein und erst während des Pressschweißens unter Druck und/oder Wärme aktiviert werden. Bei einer solchen Gestaltung lässt sich der Halter (12) vor dem Pressschweißen problemlos handhaben und applizieren, wobei ggf. die Lage noch nachträglich korrigiert werden kann.

Für die werkstofftechnische Ausgestaltung des Halters (12) gibt es entsprechend der vorgenannten Eigenschaften unterschiedliche Ausführungsmöglichkeiten. Vorzugsweise besteht der Halter (12) aus einem Kunststoff, insbesondere einem Kunststoffkleber. Alternativ sind Kautschuk oder andere Elastomere möglich. Die Konsistenz des Halters (12) ist ebenfalls variabel. Es kann sich um ein dichtes Material, alternativ aber auch um einen Schaum oder dgl. handeln. Die Materialdicke kann ebenfalls entsprechend der vorerwähnten Abwandlungsmöglichkeiten variieren.

Figur 2 zeigt eine bevorzugte anlagentechnische Ausführung. Innerhalb der Pressschweißzelle (1) sind ein oder mehrere Pressschweißvorrichtungen (2) angeordnet, die z.B. die in Figur 1 gezeigte Ausführung haben können. In die Pressschweißzelle (1) werden die verschiedenen Werkstücke (4,5) über Bauteilzuführungen (32) zugeführt. Die fertigen Schweißteile (3) verlassen die Pressschweißstelle (1) über entsprechende Ausschleusungen. Der ein- oder mehrfach vorhandenen Pressschweißvorrichtung (2) ist in Werkstückförderrichtung eine Applikationsvorrichtungen (27) vorgeschaltet, durch die zumindest die einen, mit dem Schweißmittel (7) zu versehenden Werkstücke (4) geführt werden. Die Applikationsvorrichtung (7) ist z.B. als Einleger (28) ausgeführt, der die in einem Magazin bevorrateten Schweißmittel (7) und die ggf. bereits zugeordneten Halter (12) entnimmt und auf die Werkstücke (4) aufsetzt. Alternativ können verschiedene Einleger hintereinander angeordnet sein, wobei der erste den Halter (12) zuführt und der zweite das Schweißmittel (7) auf den Halter (12) setzt. In der einfachsten Variante kann der Einleger (27) nur ein Schweißmittel (7) handhaben und auf die Werkstücke (4) applizieren. Die anderen Werkstücke (5) werden in irgendeiner geeigneten Weise der Pressschweißvorrichtung (2) und den einen Werkstücken (4) zugeführt. Hierfür kann z.B. die in Figur 2 gezeigte Handhabungseinrichtung (33) vorhanden sein, in der die Werkstücke (5) auf die mit Schweißmittel (7) versehenen Werkstücke (4) aufgesetzt werden, wobei die Teile dann gemeinsam der Pressschweißvorrichtung (2) zugeführt werden.

Figur 16 zeigt eine Variante der Applikationsvorrichtung (27), die vor allem für einen fluidischen Auftrag des Halters (12) in Form einer plastischen Masse (14) oder eines fluidischen Verbundmaterials (16) vorgesehen ist.

Die Applikationsvorrichtung (27) hat hierfür eine Auftragvorrichtung (29) mit einer Düse zum gesteuerten Auftrag auf das Werkstück (4). Die Düse kann ggf. nach ein oder mehreren Richtungen über die Werkstückoberfläche bewegt werden, um einen Auftrag in der gewünschten Schweißkontur (19) zu ermöglichen. In der gezeigten Ausführungsform wird das z.B. in Partikelform (10) vorliegende Schweißmittel (7) der plastischen Haltermasse (14) mittels einer Zuführeinrichtung (30) beigemischt. Die Partikel (10) können z.B. von einem Schweißmittelstrang scheibchenweise oder stückweise abgetrennt werden. Die Partikel (10) können hierbei eine unregelmäßige Form aufweisen und in der Art eines Granulats oder dergleichen vorliegen. Alternativ kann das Schweißmittel (10) in Form von Punktteilen (9), insbesondere in Kugelform, vorliegen.

In Abwandlung zur gezeigten Ausführungsform können zwei Auftragsvorrichtungen (29) vorhanden sein, wobei die erste zunächst den Halter (12) bzw. die plastische Masse (14) auf das Werkstück (4) aufträgt und die zweite folgende Auftragvorrichtung dann das Schweißmittel (7) in Punkt- oder Granulatform auf den Halter (12) aufbringt. Dies ermöglicht z.B. die Verlegung eines Halters (12) entlang der gesamten Schweißkontur (19) zu Dicht- oder Isolierzwecken, wobei das Schweißmittel (7) ggf. nur stellenweise auf den Halter (12) aufgetragen wird. Dieser Auftrag kann ein Auflegen oder ein Einbetten sein.

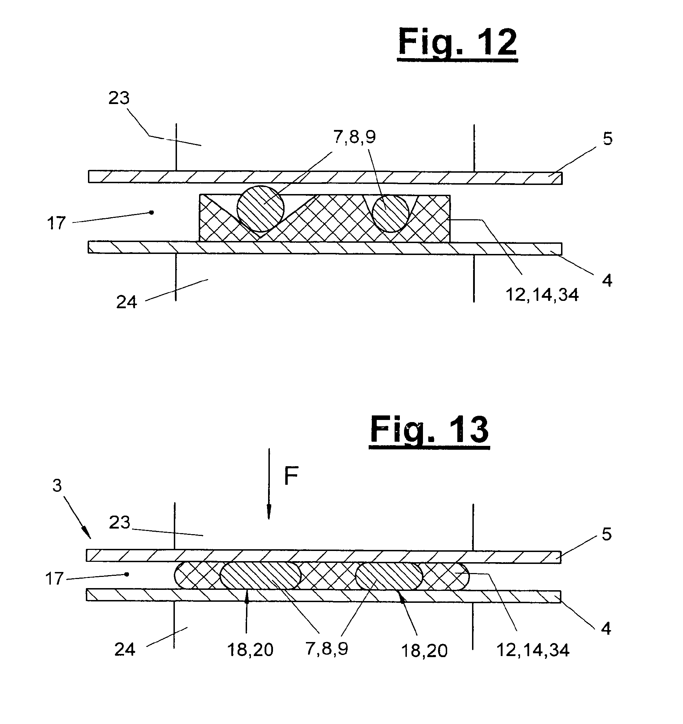

Figur 12 und 13 verdeutlichen die Vorgänge beim Pressschweißen im Spalt (17) in zwei Schritten. Figur 12 zeigt die Anordnung vor dem Anpressen der Elektroden (23,24) mit dem noch unbelasteten Schweißmittel (7) und dem Halter (12). Die gezeigte Anordnung entspricht z.B. der Darstellung von Figur 4.

Figur 13 zeigt den Endzustand und das fertige Schweißteil (3) nach dem Anpressen der Elektroden (23,24) und der Strombeaufschlagung. Unter der Anpresskraft F haben sich das Schweißmittel (7) und der Halter (12) verformt. Das Schweißmittel (7) ist unter Verdrängung des Haltermaterials in Berührungs- und Schweißkontakt mit den beiden Werkstücken (4,5) gekommen, wobei sich an den Schweißstellen (18) die gewünschte Schweißverbindung (20) ausgebildet hat. Das seitlich verdrängte Haltermaterial füllt den Spalt (17) aus und umgibt die Schweißverbindungen (20) seitlich und schirmt diese ab. Die Darstellungen sind zu Übersichtszwecken schematisiert und geben nicht die in der Praxis tatsächlich auftretenden Größenverhältnisse wieder.

Figur 14 zeigt eine Variante im Halbschnitt, wobei die linke Bildhälfte den Zustand vor dem Pressschweißen und die rechte Bildhälfte den Zustand am Ende des Pressschweißvorgangs am Schweißteil (3) verdeutlicht. Ausgangspunkt ist hierbei die Anordnung von Figur 3 mit dem dünnwandigen Halter (12) in Form einer Folie (13) oder ggf. auch einer dünnen Schicht einer plastischen Masse. Das Schweißmittel (7) liegt offen auf dem Halter (12) auf und hat einen freien Berührungskontakt mit dem oberen Werkstück (5). Beim Verpressen drückt sich das Schweißmittel (7) durch den Halter (12) und verdrängt diesen seitlich, wodurch der Berührungs- und Schweißkontakt zum unteren Werkstück (4) unter Bildung der Schweißverbindung (20) hergestellt wird. Bei dieser Variante verbleibt am Schweißteil (3) ein offener Spalt (17), der zu beliebigen Zwecken benutzt werden kann.

Figur 15 zeigt eine andere Variante ebenfalls im Halbschnitt, wobei das eine Werkstück (4) als dünnes Blech mit einer Öffnung (6) ausgebildet ist und das andere Werkstück (5) eine innenseitig hohle Schraubmutter oder ein anderes hohles Verbindungs- oder Anschlussteil ist.

Die Öffnungen in den Werkstücken (4,5) fluchten. Bei dieser Variante ergibt sich eine ringförmige Schweißkontur (19) rund um die Öffnung (6), um eine Dichtschweißung zu erreichen. Wenn z.B. durch die Öffnung (6) und die hohle Mutter (5) ein aggressives Fluid geleitet wird, soll ein Korrosionsangriff auf die Schweißverbindung (20) verhindert werden. Zu diesem Zweck wird ein ringförmiger Halter (12) rund um die Öffnung (6) gelegt. Der Halter (12) füllt vorzugsweise den Spalt (17) aus, wobei das Schweißmittel (7) in den Halter (12) eingebettet ist. Beispielsweise besteht der Halter (12) aus der vorbeschriebenen plastischen Masse (14) mit einem eingebetteten Schweißmittel (7) in Strecken-Punkt- oder Partikelform (8,9,10). Das Schweißmittel (7) kann hierbei nur stellenweise an der ringförmigen Kontur (19) vorhanden sein und z.B. eine Schweißverbindung (20) an drei im Kreis verteilten Schweißstellen (18) bilden. Das beim Zusammenpressen seitlich verdrängte Haltermaterial umgibt die Schweißstellen (20) an allen Seiten und füllt ansonsten den gesamten Spalt (17) rund um die Öffnung (6) aus.

Figur 17 verdeutlicht in einem vergrößerten und abgebrochenen Querschnitt die Umgebung einer Schweißverbindung (20) am Schweißteil (3) nach Entlastung der Anpresskraft. Der komprimierte Halter (12) versucht sich im angrenzenden Bereich der Schweißverbindung (20) teilweise zu entspannen und wieder auf die Ursprungsdicke zu vergrößern, wobei er auf die Werkstücke (4,5) im Rahmen ihrer Nachgiebigkeit eine Spannkraft und Spreizwirkung ausübt. Durch die Spannkraft und die Anlage des Halters (12) an den Werkstückoberflächen ergibt sich eine Blechverspannung rund um die Schweißverbindung (20). Hierdurch entsteht auch eine Reibkraft, welche die Scherfestigkeit der Verbindung erhöht. Wenn der Halter (12) klebende Eigenschaften hat, trägt dies zusätzlich zur Erhöhung der Scherfestigkeit bei. Figur 17 zeigt außerdem die dichte Einspannung des Halters (12) im Spalt (17), welche den Zutritt von Umwelteinflüssen, insbesondere Feuchtigkeit, korrosiven Fluiden oder dgl. zur Schweißverbindung (20) und dem dortigen Schweißmittel (7) verhindert.

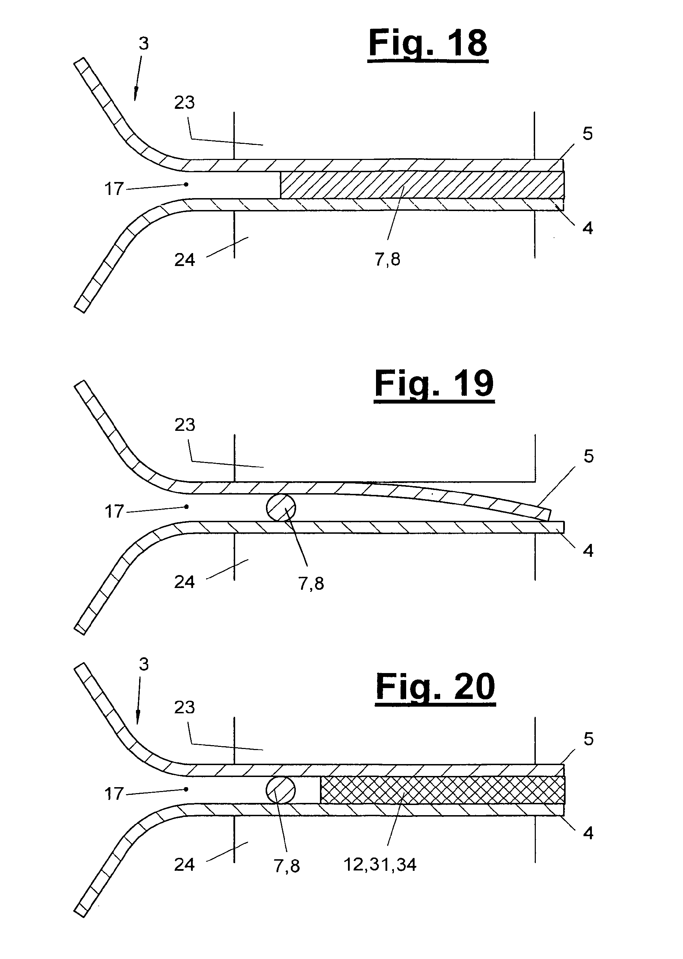

Figur 18 bis 20 zeigen besondere Werkstück- und Schweißsituationen. Die beiden Werkstücke (4,5) sind in diesem Fall Bördelflansche eines Behälters oder dergl., die durch elektrisches Pressschweißen verbunden werden sollen. In der Variante von Figur 18 werden hierzu an verschiedenen Stellen entlang des umlaufenden Bördelfalzes Schweißmittel (7) lose in den Spalt (17) zwischen den Bördelfalzen eingesteckt und verschweißt. Die Schweißmittel werden von der Falzstirnseite und quer zur Falzlängsrichtung von außen her durch eine geeignete Vorrichtung eingeschoben. Hierbei können sie z.B. von einem Strang nach dem Einstecken abgeschnitten oder anderweitig abgetrennt werden. Je nach Dichtigkeitsanforderungen des Schweißteils können zwischen den Schweißmitteln (6) offene Spalte (17) verbleiben. Die Spalte (17) können ggf. anderweitig geschlossen werden.

Figur 19 zeigt eine Ausführungsform mit einem längs des Bördelfalzverlaufs sich erstreckenden Schweißmittel (7), welches relativ weit vom äußeren Falzrand zurückversetzt angeordnet ist. Bei einer solchen Ausführungsform kann die Gefahr bestehen, dass einer der Bördelfalze (4,5) verformt ist und in Kontakt mit dem anderen Bördelfalz kommt, wodurch ein Stromübergang und ein Nebenschluss entstehen kann. Um dies zu verhindern, kann gem. Figur 20 von der Falzstirnseite her ein Isolator (31) eingeschoben werden, der die Bördelfalzränder auseinander hält. Dieser Isolator (31) wird beim Pressschweißen zusammengedrückt und dichtet den Bördelfalz umlaufend und sicher ab. Mit dieser Variante ist ein Dichtschweißen von Behältern oder dergl. möglich. Der Isolator (31) kann zugleich die Funktion eines bandartigen Halters (12) aufweisen, an dessen Innenseite das Schweißmittel (7) als Streckenteil (8) angeordnet ist. Alternativ kann das Schweißmittel (7) auch in diesem Fall ein Punktteil sein oder in Partikelform im Halter (12) eingebettet vorliegen.

Der Halter (12) kann weitere Zusatzfunktionen haben. Insbesondere kann er als Zusatzmittel für ein oder mehrere nachfolgende Weiterverarbeitungsprozesse dienen. Beispielsweise kann der Halter (12) ein Lötmittel oder ein Flussmittel zum Löten oder eine Kombination beider Mittel sein oder beinhalten. Beim Pressschweißen wird das Zusatzmittel noch nicht aktiviert und hat hier die normale Halterfunktion mit dem Tragen und Fixieren des Schweißmittels (7). In einem nachfolgenden Lötprozess kann durch Wärmezufuhr das Löt- und/oder Flussmittel aktiviert und zur Schaffung der Lötverbindung verflüssigt werden. In weiterer Abwandlung kann der Halter (12) in der Zusatzfunktion ein Geliermittel oder Dichtmittel sein, insbesondere wenn z.B. umgebogene Bördelfalze an Rändern von Fahrzeugteilen pressgeschweißt werden und das Gelier- oder Dichtmittel für eine Versiegelung der Hohlräume im Falzbereich sorgen soll. Grundsätzlich kann der Halter (12) auch eine andere als in den Ausführungsbeispielen gezeigte Form haben und sich außerhalb des Spaltes (17) und des Pressschweißbereichs erstrecken. Außerdem kann der Halter (12) als Träger für weitere Materialien dienen und diese neben dem Schweißmittel (7) ebenfalls in den Spalt (17) einbringen. In Abwandlung der vorbeschriebenen Lötfunktion kann der Halter als Träger für ein separates Löt- und/oder Flussmittel dienen. In diesen Fällen sind die Abmessungen des Halters (12) an die Zusatzfunktionen angepasst. Der Halter (12) kann außerdem aus einer Kombination verschiedener Materialien bestehen, die im vorerwähnten Sinne auch unterschiedlichen Zwecken und Weiterverarbeitungsprozessen dienen können.

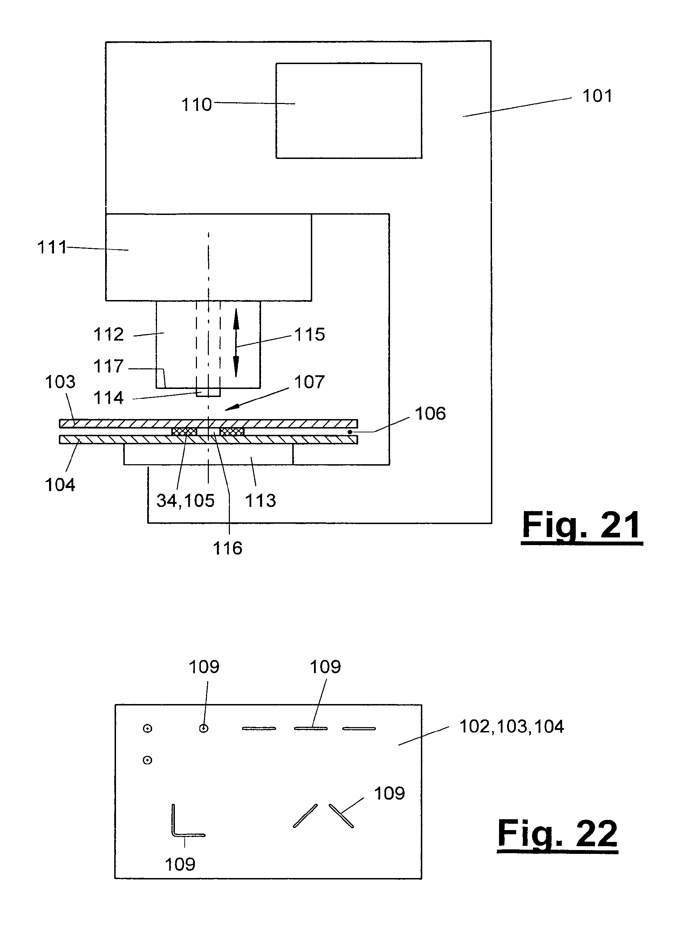

In Figur 21 bis 29 ist eine andere Variante mit einer hierfür geeigneten Schweißvorrichtung (101), z.B. einer Kondensatorentladungs-Schweißvorrichtung, dargestellt. Figur 22 zeigt schematisch ein Schweißteil (102).

Das Schweißteil (102) besteht aus zwei oder mehr Werkstücken (103,104), die mittels Schweißverbindungen (109) oder Schweißnähten miteinander verbunden werden. Die Schweißverbindungen (109) können in der nachfolgend beschriebenen Weise mit der Schweißvorrichtung (101) hergestellt werden. Die Werkstücke (103,104) können von beliebig geeigneter Art und Größe sein. Sie bestehen aus schweißfähigen und elektrisch leitenden Werkstoffen, z.B. Stahl. Die Werkstücke (103,104) können eine beliebige Geometrie aufweisen. Mindestens eines der Werkstücke ist zumindest im Bereich der ein- oder mehrfach vorhandenen Schweißstellen (107) als dünnwandiges und elastisch oder plastisch verformbares Blech ausgeführt.

Die Schweißvorrichtung (101) besteht aus einem Maschinengestell, einer vorzugsweise innerhalb der Vorrichtung angeordneten Schweißstromquelle (110) und zumindest zwei Elektroden (112,113) mit mindestens einer Elektrodenanpressvorrichtung (111). Die Schweißstromquelle (110) ist z.B. als Kondensatorentladungs-Stromquelle ausgeführt. Die Schweißstromquelle (110) erzeugt zum Schweißen einen Impulsstrom mit hoher Stromstärke, der über die Elektroden (112,113) durch die Werkstücke (103,104) an der Schweißstelle (107) geleitet wird. Während des Schweißprozesses wird an der Schweißstelle (107) der Impulsstrom mittels eines Isolators (105) und einer im Prozess eingebrachten Verformung (108) an zumindest einem der an der Verbindung beteiligten Werkstücke (103,104) fokusiert. Dies bewirkt an der Schweißstelle (107) einen lokal begrenzten Stromübergang zwischen den Werkstücken (103,104) in Verbindung mit einer flächenmäßig begrenzten Erwärmung und zumindest teilweisen Plastifizierung der Werkstücke (103,104) an der Kontaktstelle, wobei hier eine Schweißverbindung (109) entsteht.

Zumindest eine Elektrode (112) hat einen in Zustellrichtung (115) vorstehenden über die stirnseitige Elektrodenkontaktfläche (117) vorstehenden Stempel (114), der zur Verformung eines beaufschlagten Werkstücks (103) an der Schweißstelle (107) beim Anpressen der Elektroden (112,113) mittels der Elektrodenanpressvorrichtung (111) dient. Der Stempel (114) verformt mit seinem überstehenden Bereich das beaufschlagte Werkstück (103) derart, dass der vorerwähnte Werkstückkontakt mit der Stromleitung entsteht.

Der Stempel (114) besteht aus einem geeigneten Material, welches mit dem beaufschlagten Werkstück (103) keine Schweißverbindung eingeht. Andererseits ist das Stempelmaterial ausreichend fest und hart, um das beaufschlagte Werkstück (103) verformen zu können. Der Stempel (114) kann z.B. aus einem Hartmetall mit einer sehr hohen Schmelztemperatur bestehen, die durch den Impulsstrom nicht erreicht wird. Das Stempelmaterial kann dabei elektrisch leitend oder elektrisch isolierend sein. Möglich sind z.B. Keramikeinsätze zur Stempelbildung.

Der Stempel (114) ist vorzugsweise im Innenbereich der zugehörigen Elektrode (112) angeordnet und wird von dieser z.B. allseitig umgeben. Die Stromübertragung auf das beaufschlagte Werkstück (103) erfolgt über die vorzugsweise ebene oder gegebenenfalls an die Werkstückgeometrie angepasste Elektrodenstirnwand (117). Der Überstand des Stempels (114) gegenüber der Elektrodenstirnwand (117) ist an die Verformbarkeit des beaufschlagten Werkstücks (103), an die Weite des nachfolgend näher erläuterten Spaltes (106) zwischen den Werkstücken (103,104) und an die Kompressibilität eines im Spalt (106) angeordneten Isolators (105) angepasst.

Mit der erfindungsgemäßen Schweißtechnik werden die zu verbindenden Werkstücke (103,104) zunächst mit gegenseitigem Abstand an der jeweiligen Schweißstelle (107) positioniert. Sie werden erst während des Schweißprozesses durch eine mittels des Stempels (114) eingebrachte Verformung (108) des beaufschlagten Werkstücks (103) in stromleitenden und räumlich begrenzten Kontakt miteinander gebracht. An mindestens einem der zu verbindenden Werkstücke (103,104) wird hierfür an der oder den Verbindungsstelle(n) (107) mindestens ein elektrisch isolierendes Material (34) als Isolator (105) angebracht, der im wesentlichen bogen- oder ringförmig ausgebildet ist, einen innenliegenden Freiraum (116) aufweist und die Schweißstelle (107) bzw. die hier zu schaffende Schweißverbindung (109) zumindest außenseitig umgibt. Der Isolator (105) kann eine lokal auf die Verbindungsstelle(n) (107) beschränkte räumliche Erstreckung haben. Er kann sich alternativ über größere Bereiche erstrecken, z.B. auch über den gesamten Kontaktflächenbereich der Werkstücke (103,104)

Der Isolator (105) isoliert die zu verbindenden Werkstücke (103,104) elektrisch. Hierbei kann er eine räumliche Distanzierung der Werkstücke (103,104) in Zustellrichtung (115) unter Bildung eines Spaltes (106) bewirken. Der Isolator (105) hat hierfür eine Dicke, die im Betriebszustand zumindest geringfügig größer als die Summe der Rautiefen der beiden benachbarten Werkstückflächen sein kann und einen unerwünschten elektrischen Stromfluss verhindert. Die Dicke des Isolators (105) richtet sich ansonsten nach der am Schweißteil (102) tolerablen Spaltweite. In der Praxis empfehlen sich Isolatordicken von ca. 100 bis 1.000 µm, z.B. im Bereich von ca. 200 µm.

Der Isolator (105) besteht aus einem begrenzt kompressiblen und vorzugsweise zäh elastischen Material. Der Isolator (105) hat ferner elektrisch isolierende Materialeigenschaften. Die hierfür geeigneten Materialien können Papier, Kunststoff oder dergleichen sein. Geeignet sind insbesondere Kunststoff-Polymere. Der Isolator (105) kann auch aus einem Klebstoff bestehen. Dieser Klebstoff kann beim Auftrag bereits Klebewirkung entfalten oder erst während des Schweißprozesses durch den Stromfluss und/oder die Wärmeentwicklung aktiviert werden.

Der Isolator (105) kann in beliebig geeigneter Form vorliegen. Er kann z.B. die Gestalt einer dünnwandigen Folie haben, die zwischen die Werkstücke (103,104) eingelegt wird. Ferner ist es möglich, den Isolator (105) auf ein Werkstück (103,104) aufzudrucken, z.B. durch Tampondruck oder dergleichen. Hierfür eignen sich plastische Materialien, insbesondere Polymere.

Die Ringform des Isolators (105) kann sich nach der gewünschten Form der Schweißverbindung (109) richten. Figur 22 zeigt hierfür verschieden Formen von Schweißverbindungen (109) bzw. Schweißnähten. Im linken oberen Eckbereich des von den Werkstücken (103,104) gebildeten Schweißteils (102) sind punktförmige oder kreisförmige Schweißverbindungen (109) dargestellt. Alternativ sind Steppnähte mit geraden Nahtabschnitten oder auch winklig mit Abstand angeordnete gerade Nahtabschnitte sowie abgewinkelte oder gebogene Nahtformen möglich. Grundsätzlich sind beliebige Nahtformen möglich, sofern sie für das Impulsschweißen geeignet sind.

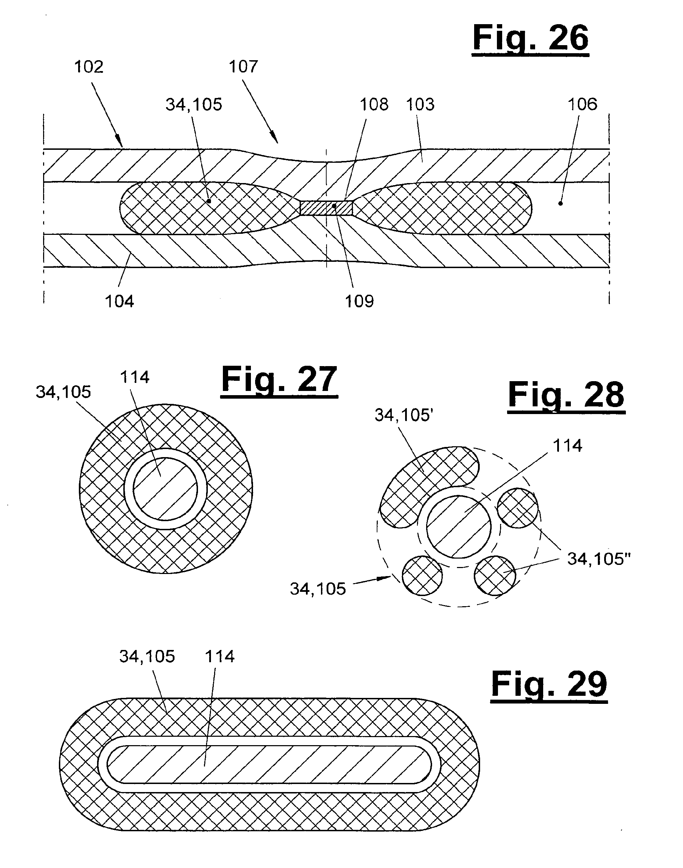

Der Isolator (105) umgibt die zugehörige Schweißverbindung (109) zumindest außenseitig. Hierfür kann der Isolator (105) z.B. die in Figur 27 und 29 gezeigte geschlossene Ringform haben, welche die Schweißstelle (107) vollumfänglich umgibt und beispielsweise als Kreisring oder als Ovalring oder in beliebig anderer Weise ausgebildet sein kann. Die Ringform muss keine geschlossene Linienform haben. Sie kann gemäß Figur 28 unterbrochen sein und von mehreren Isolatorteilen (105',105") gebildet werden, die entlang des Umfangs der Schweißverbindung in einer ringförmigen Hüllkontur angeordnet sind. Als weitere Alternative ist eine Bogenform möglich, die die Schweißstelle (107) nur bereichsweise umgibt und ebenfalls eine geschlossene oder unterbrochene Linienform haben kann. Die Isolatorteile (105',105") können unterschiedliche Formen und Größen haben und z.B. aus Punkten oder Linien bestehen.

Die Querschnittsform des Stempels (114) richtet sich nach der gewünschten Geometrie der Schweißverbindung (109). Außerdem können die Querschnittsform des Stempels (114) und die Form des innenseitigen Isolatorfreiraums aneinander angepasst sein.

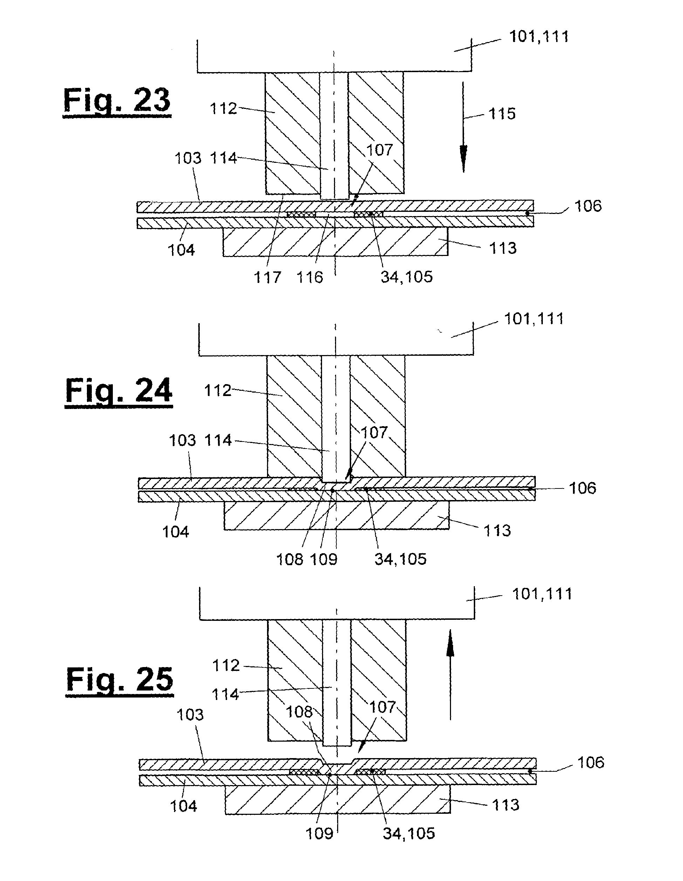

Figur 23 bis 25 zeigen eine Bewegungs- und Funktionsabfolge der Schweißvorrichtung (101) im Schweißprozess. Im ersten Schritt gemäß Figur 23 wird mittels der Elektrodenanpressvorrichtung (111) die eine Elektrode (112) mit dem Stempel (114) in Zustellrichtung (115) an das beaufschlagte Werkstück (103) zugestellt. Der Stempel (114) ist an der Schweißstelle (107) zentrisch zum ringförmigen Isolator (105) ausgerichtet. Der in Zustellrichtung (115) vorstehende Stempel (114) kommt mit seiner Stirnfläche vor der Elektrode (112) in Kontakt mit dem Werkstück (103). Das andere Werkstück (104) liegt auf der anderen gegenüber liegenden Elektrode (113) auf und wird hier abgestützt.

Im nächsten Schritt gemäß Figur 24 ist die Elektrode (112) soweit vorgeschoben, bis sie mit ihrer Stirnfläche (116) stromleitenden Kontakt mit dem Werkstück (103) hat. Der vorstehende Stempel (114) hat das Werkstück (103) verformt und dabei einen Buckel (108) ausgebildet, der durch den freien Innenraum (116) des Isolators (105)greift und in stromleitenden Kontakt mit dem anderen Werkstück (104) gelangt. Unter der in Zustellrichtung (115) und senkrecht zu den Werkstücken (103,104) wirkenden Anpresskraft ist auch der Isolator (105) komprimiert worden. Die dabei reduzierte Isolatordicke ist noch immer so groß, dass der Isolator (105) seine stromisolierende Funktion beibehält und die Werkstücke (103,104) im Bereich außerhalb des Isolators (105) unter Spaltbildung distanziert. Ein stromleitender Kontakt zwischen den Werkstücken (103,104) ist nur im Bereich der Verformung (108) vorhanden. Sobald diese Stellung von Figur 24 erreicht ist, wird über eine Steuerung (nicht dargestellt) der Schweißvorrichtung (101) die Schweißstromquelle (110) und der Impulsstrom geschaltet. Hierdurch entsteht an der Kontaktstelle zwischen den Werkstücken (103,104) die Schweißverbindung (109).

Nach Beendigung des Schweißvorgangs und Abschalten der Schweißstromquelle (110) wird die Elektrode (112) mit dem Stempel (114) wieder abgehoben. Der entlastete Isolator (105) kann sich im Rahmen der Verformungsnachgiebigkeit der Werkstücke (103,104) wieder etwas entspannen.

Anschließend werden die Werkstücke (103,104) gegenüber der Schweißvorrichtung (101) zur nächsten Schweißstelle (107) hin versetzt und der vorbeschriebene Schweißprozess startet von neuem.

Figur 26 verdeutlicht die Situation nach Stempelentlastung. Der komprimierte Isolator (105) versucht sich im angrenzenden Bereich der Schweißverbindung (109) teilweise zu entspannen und wieder auf die Ursprungsdicke zu vergrößern, wobei er auf die Werkstücke (103,104) im Rahmen ihrer Nachgiebigkeit eine Spannkraft und Spreizwirkung ausübt. Durch die Spannkraft und die Anlage des Isolators (105) an den Werkstückoberflächen ergibt sich eine Blechverspannung rund um die Schweißverbindung (109) und auch eine Reibkraft, welche gemeinsam die Scherfestigkeit der Verbindung erhöhen. Der Isolator (105) ist zudem dichtend im Spalt (106) eingespannt und verhindert den Zutritt von Umwelteinflüssen, insbesondere Feuchtigkeit, Gasen oder dgl., zur Schweißverbindung (109).

In einer nicht dargestellten Variante zu Figur 21 kann in den Freiraum (116) des Isolators (105) ein Schweißmittel eingelegt sein, welches aus metallischen und elektrisch leitenden Partikeln z.B. in Form von Kugeln oder Körnern besteht, die kleiner als die vom Isolator (105) definierte Spalthöhe sind und vorzugsweise zunächst noch keinen Berührungskontakt zu beiden Werkstücken (103,104) haben und noch keine elektrische Verbindung herstellen. Alternativ kann das Schweißmittel in Festkörperform, z.B. in Gestalt eines dünnwandigen Ringes oder dergl. vorliegen. Der elektrisch leitende Kontakt wird erst beim Zusammenpressen des Isolators (105) und in der Verkleinerung der Spalthöhe geschaffen, wobei zu diesem Zweck der vorstehende Stempel (114) über eine leichte Verformung des beaufschlagten Bauteils (103) unterstützend mitwirkt. Auf den Stempel (114) kann alternativ verzichtet werden. Am fertigen Schweißteil umschließt wiederum der Isolator (105) bogen- oder ringförmig die Schweißstelle und das dortige eingebundene Schweißmittel und umgibt sie schützend.

Abwandlungen der gezeigten Ausführungsformen sind in verschiedener Weise möglich. Zum einen kann die Schweißvorrichtung (101) stationär oder instationär sein. Sie lässt sich beispielsweise an einer Transporteinrichtung oder einem mehrachsigen Manipulator, z.B. einem Industrieroboter, montieren. Ferner kann die Schweißvorrichtung (101) mehrere Elektrodenpaare (112,113) und Stempel (114) aufweisen und diese gemeinsam oder zeitversetzt an verschiedenen Stellen an die Werkstücke (103,104) zustellen. In weiterer Abwandlung kann der Stempel (114) an der anderen, ortsfest gehaltenen Elektrode (113) angeordnet sein. Es ist auch möglich, an beiden Elektroden (112,113) jeweils einen Stempel anzuordnen. Der Isolator (105) kann eine großflächige Folie mit Ausnehmungen im Bereich der Schweißstellen sein.

Ferner kann die Pressschweißvorrichtung (2) insgesamt in ihrer technischen Ausgestaltung und Funktion beliebig variieren. Statt Impulsschweißströmen kann auch mit anderen Arten von Schweißströmen gearbeitet werden. Die beschriebene Technik mit dem Schweißmittel (7) kann z.B. auch mit elektrischen Punktschweißzangen verwendet werden. Variabel sind ferner Formgebung, Material und Anordnung des Schweißmittels (7) und des Halters (12).

### BEZUGSZEICHENLISTE

- 1: Pressschweißstation, Pressschweißzelle
- 2: Pressschweißvorrichtung
- 3: Schweißteil
- 4: Werkstück, Blech
- 5: Werkstück, Blech, Mutter
- 6: Öffnung
- 7: Schweißmittel
- 8: Streckenteil
- 9: Punktteil
- 10: Partikel
- 11: Verjüngung
- 12: Halter, Träger
- 13: Folie
- 14: plastische Masse
- 15: Hülle, Beschichtung
- 16: Verbundteil
- 17: Spalt, Distanz
- 18: Schweißstelle
- 19: Schweißkontur
- 20: Schweißverbindung
- 21: Schweißstromquelle
- 22: Elektrodenanpressvorrichtung
- 23: Elektrode
- 24: Elektrode
- 25: Stromanschluss
- 26: Zustellrichtung, Anpressrichtung
- 27: Applikationsvorrichtung
- 28: Einleger
- 29: Auftragvorrichtung
- 30: Zuführeinrichtung
- 31: Isolator
- 32: Bauteilzuführung
- 33: Handhabungseinrichtung
- 34: elektrisch isolierendes Material
- 101: Schweißvorrichtung
- 102: Schweißteil
- 103: Werkstück, Blech
- 104: Werkstück, Blech
- 105: Isolator
- 105': Isolatorteil
- 105": Isolatorteil
- 106: Spalt
- 107: Schweißstelle
- 108: Verformung, Buckel
- 109: Schweißverbindung
- 110: Schweißstromquelle
- 111: Elektrodenanpressvorrichtung
- 112: Elektrode
- 113: Elektrode
- 114: Stempel
- 115: Zustellrichtung, Anpressrichtung
- 116: Freiraum
- 117: Elektrodenkontaktfläche, Elektrodenstirnwand

## Patentansprüche

1. Verfahren zum elektrischen Pressschweißen von Werkstücken (4,5,103,104) mit einer Pressschweißvorrichtung (2), wobei die Werkstücke (4,5,103,104) zusammengepresst und mit einem Schweißstrom, insbesondere einem Impulsstrom, beaufschlagt werden, **dadurch gekennzeichnet, dass** vor dem Pressschweißen zwischen die Werkstücke (4,5,103,104) an der Schweißstelle (18,107) ein elastisches oder plastisches und elektrisch isolierendes Material (34) eingebracht wird, welches Zusammenpressen derart verformt oder verdrängt wird, dass eine stromleitende Verbindung zwischen den Werkstücken (4,5,103,104) hergestellt wird.

2. Verfahren nach Anspruch 1, **dadurch gekennzeichnet, dass** ein elektrisch isolierendes Material (34) mit Klebstoff- oder Haftwirkung verwendet wird.

3. Verfahren nach Anspruch 1 oder 2, **dadurch gekennzeichnet, dass** ein elektrisch isolierendes Material (34) in Folienform (13) oder in Form einer plastischen Masse (14) verwendet wird.

4. Verfahren nach Anspruch 1, 2 oder 3, **dadurch gekennzeichnet, dass** das elektrisch isolierende Material (34) in einer geschlossenen oder unterbrochenen, bogen- oder ringförmigen Anordnung um die Schweißstelle (18,107) angeordnet wird.

5. Verfahren nach Anspruch 4, **dadurch gekennzeichnet, dass** in den Freiraum (116) des bogen- oder ringförmigen elektrisch isolierende Materials (34) ein Schweißmittel (107) zur elektrischen Kontaktbildung beim Zusammenpressen eingelegt oder in mindestens eines der Werkstücke (4,5,103,104) eine kontaktbildende Verformung (108) von einer Elektrode (23,24,112,113) beim Zusammenpressen eingebracht wird.

6. Verfahren nach Anspruch 1, 2 oder 3, **dadurch gekennzeichnet, dass** zusammen mit dem elektrisch isolierenden Material (34) mindestens ein elektrisch leitfähiges und schweißkontaktbildendes Schweißmittel (7) zwischen die Werkstücke (4,5,103,104) eingebracht wird.

7. Verfahren nach Anspruch 6, **dadurch gekennzeichnet, dass** das elektrisch isolierende Material (34) und das Schweißmittel (7) zumindest bereichsweise entlang einer Schweißkontur (19) aufgebracht werden.

8. Verfahren nach Anspruch 6 oder 7, **dadurch gekennzeichnet, dass** das Schweißmittel (7) zumindest bereichsweise mit einer elektrisch isolierenden Hülle (15) oder Beschichtung umgeben wird, wobei es vorzugsweise in Partikelform (10) einer plastischen Masse (14) beigemischt wird.

9. Verfahren nach einem der vorhergehenden Ansprüche, **dadurch gekennzeichnet, dass** in einer Pressschweissstation (1) der Auftrag des Schweißmittels (7) und das anschließende Pressschweißen durchgeführt werden.

10. Verfahren nach einem der vorhergehenden Ansprüche, **dadurch gekennzeichnet, dass** mit dem verformten elektrisch isolierenden Material (34) die Schweißstelle (18) zumindest bereichsweise abgedeckt wird.

11. Einrichtung zum elektrischen Pressschweißen von Werkstücken (4,5,103,104) mit einer Pressschweißvorrichtung (2,101) mit Elektroden (23,24,112,113), in der die Werkstücke (4,5,103,104) zusammengepresst und mit einem Schweißstrom, insbesondere einem Impulsstrom, beaufschlagt werden, **dadurch gekennzeichnet, dass** der Pressschweißvorrichtung (2,101) eine Applikationsvorrichtung (27) für ein elektrisch isolierendes Material (34) und ggf. ein elektrisch leitfähiges und schweißkontaktbildendes Schweißmittel (7) zugeordnet und vorgeschaltet ist.

12. Einrichtung nach Anspruch 11, **dadurch gekennzeichnet, dass** mindestens eine Elektrode (23,24,112,113) einen in Zustellrichtung (115) über die Elektrodenkontaktfläche (117) vorstehenden Stempel (114) zur Verformung eines beaufschlagten Werkstücks (4,5,103,104) an der Schweißstelle (18,107) aufweist.

13. Einrichtung nach Anspruch 12, **dadurch gekennzeichnet, dass** der Stempel (114) aus einem Material besteht, welches mit dem beaufschlagten Werkstück (4,5,103,104) keine Schweißverbindung eingeht.

14. Einrichtung nach Anspruch 11, **dadurch gekennzeichnet, dass** die Applikationsvorrichtung (27) einen Einleger (28) für das elektrisch isolierende Material (34) und ggf. das Schweißmittel (7) aufweist.

15. Einrichtung nach Anspruch 11, **dadurch gekennzeichnet, dass** die Applikationsvorrichtung (27) eine Auftragvorrichtung (29) für eine elektrisch isolierende, plastische Masse (14) und ein Schweißmittel (7) in plastischer Form oder Partikelform (10) aufweist.

16. Einrichtung nach Anspruch 15, **dadurch gekennzeichnet, dass** die Auftragvorrichtung (29) eine Zuführeinrichtung (30) für Schweißmittel-Partikel (10) zum Beimischen zu einer plastischen Masse (14) aufweist.

17. Einrichtung nach einem der Ansprüche 11 bis 16, **dadurch gekennzeichnet, dass** mindestens eine Pressschweißvorrichtung (2) und mindestens eine Applikationsvorrichtung (27) gemeinsam in einer Pressschweissstation (1) angeordnet sind.

18. Hilfsmittel zum elektrischen Pressschweißen von Werkstücken (4,5,103,104) mit einer Pressschweißvorrichtung (2), in der die Werkstücke (4,5,103,104) zusammengepresst und mit einem Schweißstrom, insbesondere einem Impulsstrom, beaufschlagt werden, **dadurch gekennzeichnet, dass** das Hilfsmittel aus einem elastischen oder plastischen und elektrisch isolierenden Material (34) in einer solchen Form und Größe besteht, dass es die Werkstücke (4,5,103,104) zunächst elektrisch isolieren kann und beim Zusammenpressen derart verformbar oder verdrängbar ist, dass die elektrische Isolation aufhebbar und eine stromleitende Verbindung zwischen den Werkstücken (4,5,103,104) hergestellbar ist.
